# EUROPÄISCHE PATENTSCHRIFT

(11) **EP 0 601 482 B1**
(45) Veröffentlichungstag und Bekanntmachung des Hinweises auf die Patenterteilung: **12.07.1995**
(21) Anmeldenummer: 93119437.7
(22) Anmeldetag: 02.12.1993
(51) Int. Cl.: C09C 1/30

(54) **Verfahren zur Hydrophobierung von pyrogen hergestelltem Siliciumdioxid**
Process for rendering pyrogenic silica hydrophobic
Procédé pour rendre hydrophobe de la silice pyrogénique

(30) Priorität: 03.12.1992 DE 4240741
(43) Veröffentlichungstag der Anmeldung: 15.06.1994
(73) Patentinhaber: WACKER-CHEMIE GMBH, D-81737 München (DE)
(72) Erfinder: Mühlhofer, Ernst, Dr., D-87477 Sulzberg/Allg (DE); Kratel, Günter, Dr., D-87471 Durach-Bechen (DE); Scherm, Peter, Dr., D-84547 Emmerting (DE)

(56) Entgegenhaltungen:
- EP-A- 0 090 125
- DE-B- 1 163 784
- FR-A- 1 234 245

## Beschreibung

Die Erfindung betrifft ein Verfahren zur kontinuierlichen Hydrophobierung von pyrogen hergestelltem, hochdispersem Siliciumdioxid bei dem die Abgase in die SiO₂ Reaktionsflamme zurückgeführt werden.

Es ist aus EP-B-90125 bekannt, die bei der Hydrophobierung der hochdispersen Kieselsäure entstehenden Reaktionsgase, die neben Chlorwasserstoff noch beträchtliche Mengen an nicht abreagiertem Dimethyldichlorsilan enthalten in die Kühlstrecke nach der Siliciumdioxid-Reaktionsflamme zu leiten. Dadurch soll die zur HCl-Absorption gelangenden Mengen an Dimethyldichlorsilan minimiert werden.

Aufgabe der Erfindung ist die Bereitstellung eines Verfahrens zur Hydrophobierung von Siliciumdioxid, welches die Umweltbelastung verringert.

Die Aufgabe wird gelöst durch ein Verfahren zur kontinuierlichen Hydrophobierung von aus Siliciumhalogenverbindungen pyrogen hergestelltem Siliciumdioxid mittels Organohalogensilanen, welches dadurch gekennzeichnet ist, daß alle organische Bestandteile enthaltenden Abgase in die Mischkammer vor dem SiO₂ Reaktionsbrenner geleitet und in der SiO₂ Reaktionsflamme verbrannt werden.

Das in bekannter Weise (siehe beispielsweise DE-C-3115002; entspricht US 4292290) aus Siliciumhalogenverbindungen pyrogen erzeugte Siliciumdioxid wird nach Abtrennung der Rauchgase unter Einsatz eines Organohalogensilans als Hydrophobierungsmittel, von Wasserdampf sowie unter Zuführung eines Inertgases hydrophobiert. Die Hydrophobierung wird bevorzugt im Gegenstromverfahren durchgeführt. Bevorzugt wird weiterhin ein Hydrophobierungshilfsmittels zugesetzt.

Von dem aus Siliciumhalogenverbindungen pyrogen erzeugten Siliciumdioxid werden die Rauchgase beispielsweise mittels geeigneter Filter abgetrennt. Das SiO₂ wird zur Hydrophobierung sodann bevorzugt von oben in einen dafür geeigneten siloartigen Reaktionsraum geleitet. Der Reaktionsraum ist bevorzugterweise wärmeisoliert. Er wird durch das abgeschiedene warme Siliciumdioxid auf die für die erfindungsgemäße Hydrophobierung notwendige Temperatur erwärmt. In den Reaktionsraum wird nach Erreichen des erwünschten Befüllungsgrades dampfförmig ein Hydrophobierungsmittel, gegebenenfalls ein Hydrophobierungshilfsmittel, Wasserdampf und Inertgas eingeleitet. Die Zufuhr dieser Substanzen erfolgt bevorzugt im unteren Drittel des Reaktionsraumes. Die Substanzen werden mit einer Temperatur zwischen 110 und 140 bevorzugt 120 und 130, besonders bevorzugt mit 125 °C eindosiert. Bevorzugterweise sind gegebenenfalls vorhandenes Hydrophobierungsmittel, Hydrophobierungskatalysator und/oder Wasserdampf beim Zudosieren mit Inertgas verdünnt.

Die Hydrophobierung des Siliciumdioxids erfolgt bei Temperaturen von 200°C bis 800°C, bei Verwendung eines Hydrophobierungshilfsmittels bei 60°C bis 350°C bevorzugt von 80 bis 150°C über einen Zeitraum von 2 bis 5 bevorzugt 3 bis 4 min.

Als Hydrophobierungsmittel werden bekannte Organohalogensilane verwendet. Bevorzugt werden Alkylchlorverbindungen, besonders bevorzugt Dimethyldichlorsilan eingesetzt.

Als Hydrophobierungshilfsmittel wird bevorzugt Methanol eingesetzt.

Als Inertgas wird bevorzugt Stickstoff verwendet.

Durch den Einsatz eines Hydrophobierungshilfsmittels ist es möglich, die Hydrophobierung von pyrogen erzeugtem SiO₂ mit einem erheblich geringerem Energieaufwand als bisher üblich durchzuführen. Weiterhin wird dadurch eine gute Hydrophobierung des Siliciumdioxids auch bei einem hohen Mengendurchfluß an Siliciumdioxid ermöglicht.

Die im Hydrophobierungssilo anfallenden Abgase werden gesammelt, in die Mischkammer vor dem SiO₂ Brenner geleitet, dort mit den Edukten zur Erzeugung des pyrogenen SiO₂ vermischt und diese Mischung dem Brenner zur Erzeugung der pyrogenen Kieselsäure zugeführt und dort verbrannt. Die so erzeugte pyrogene Kieselsäure unterscheidet sich qualitativ nicht von einem herkömmlich erzeugten Produkt, während eine pyrogene Kieselsäure, bei der die Abgase in den Ringschlitz des Brenners zurückgeführt wurde nicht die Qualität herkömmlicher Produkte erreichte.

Durch die erfindungsgemäße Abgasrückführung in die Vormischstrecke des Reaktionsbrenners wird somit die Emissionsbelastung der Umwelt reduziert, ohne daß es dadurch zu Qualitätsverlusten beim Produkt kommt.

Zudem wird die Verunreinigung der anfallenden Salzsäure mit siliciumorganischen und organischen Bestandteilen vermieden, so daß diese problemlos weiterverarbeitet werden kann.

Anhand der Zeichnungen werden verschiedene Ausführungsformen des erfindungsgemäßen Verfahrens dargestellt. Die Anwendungsmöglichkeit des erfindungsgemäßen Verfahrens ist jedoch nicht auf diese Ausführungsformen beschränkt.

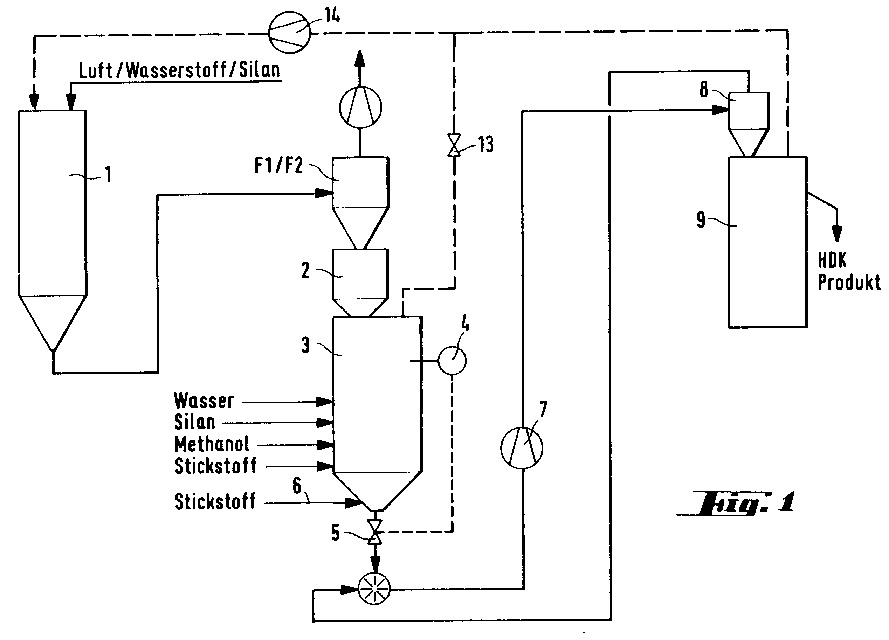

Bei der in Fig.1 dargestellten Ausführungsform wird in einer Brennkammer 1 Siliciumdioxid durch Verbrennen eines Organohalogensilans erzeugt. Dies geschieht beispielsweise durch Verbrennen von Methyldichlorsilan mit Luft. Mittels der Filter F1/F2 werden die chlorwasserstoff- und chlorhaltigen Rauchgase vom pyrogen erzeugten SiO₂ abgetrennt. Das Siliciumdioxid gelangt über einen Zwischentrichter 2 in den Reaktionsraum, der im folgenden als Hydrophobierungssilo bezeichnet wird. In dem Hydrophobierungssilo 3 wird der Siliciumdioxid Füllstand mittels einer Apparatur zur Füllstandsmessung 4 registriert und mittels einer durch diese Apparatur gesteuerten Regeleinrichtung 5 auf dem gewünschten Füllstand gehalten. Zur Ermittlung des Füllstands im Hydrophobierungssilo wird bevorzugt eine radioaktive Füllstandsmessung verwendet. Als Regeleinrichtung 5 ist eine Regelklappe besonders geeignet. Im unteren Drittel des Silos werden dampfförmig und jeweils mit erwärmtem Inertgas verdünnt bei einer Temperatur von 110 bis 140°C Hydrophobierungsmittel, Hydrophobierungshilfsmittel, Wasserdampf und weiteres Inertgas eindosiert.

Durch Inertgasimpulse 6 direkt über der Regelklappe 5 wird der Siliciumdioxidfluß durch die Regelklappe 5 gewährleistet. Zudem wird dadurch vermieden, daß größere Mengen an Chlorwasserstoffgas oder Hydrophobierungsmittel in den Fließbett-Trockner 9 gelangen.

Das hydrophobierte Siliciumdioxid wird aus dem Hydrophobierungssilo 3 über einen Förderkreislauf, bestehend aus einem Ventilator 7 und Zyklon 8 dem Fließbett-Trockner 9 zugeführt. Dort wird das hydrophobierte Siliciumdioxid entsäuert. Die Abgase des Fließbett-Trockners werden mit dem aus dem Hydrophobierungssilo abgeleiteten überschüssigen Gemisch aus Inertgas, Hydrophobierungsmittel, Hydrophobierungshilfsmittel, dem bei der Hydrophobierungsreaktion anfallenden Chlorwasserstoff sowie den entstehenden Nebenprodukten vereinigt und mittels eines Ventilators 14 in der Mischkammer vor dem Brenner dem Reaktionsgemisch zur Herstellung der pyrogenen Kieselsäure beigemischt. Die genannten Abgase aus dem Hydrophobierungssilo werden mittels eines Schiebers 13 aus dem Hydrophobierungssilo abgeleitet und so der Druck im Hydrophobierungssilo auf 0 bis 30 mbar gehalten. In der Siliciumdioxid-Reaktionsflamme werden die kohlenstoffhaltigen Verbindungen der vereinigten Abgase aus Hydrophobierungssilo 3 und Fließbett-Trockner 9 quantitativ verbrannt.

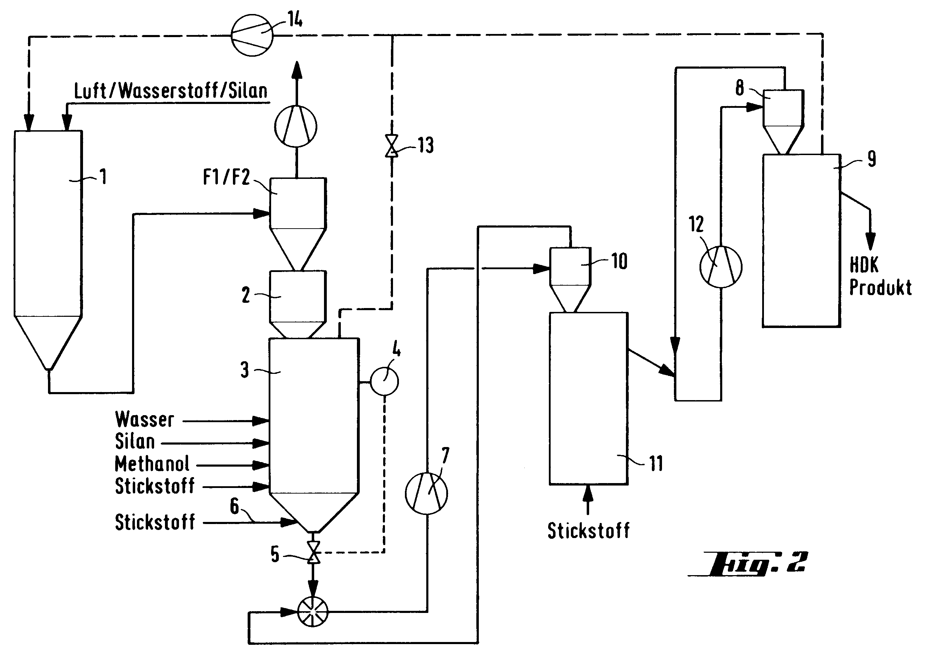

Eine andere Ausführungsform des erfindungsgemäßen Verfahrens ist in Fig. 2 dargestellt. Die Herstellung der pyrogenen Kieselsäure sowie die Hydrophobierung unter Einsatz des Hydrophobierungshilfsmittels erfolgt wie für Fig. 1 beschrieben: Das hydrophobierte Siliciumdioxid wird aus dem Hydrophobierungssilo 3 über die Regelklappe 5 mittels eines Ventilators 7 und eines Zyklons 10 in einen Wirbelbettreaktor 11 befördert. Dort wird es auf 300 bis 350 °C erhitzt und anschließend über einen Förderkreislauf aus Ventilator 12 und Zyklon 8 in den Fließbett-Trockner 9 gefördert. Durch die Verwendung des Wirbelbettreaktors läßt sich die einzusetzende Menge an Hydrophobierungshilfsmittel um bis zu 70 % im Vergleich zu der in Fig. 1 dargestellten Ausführungsform verringern. Das Abgas aus dem Hydrophobierungssilo wird, wie für Fig. 1 beschrieben, zusammen mit dem Abgas des Fließbett-Trockners in der Brenner-Vormischstrecke dem Reaktionsgemisch zur Herstellung des Siliciumdioxids beigemischt und in der Reaktionsflamme quantitativ verbrannt. Das hydrophobierte SiO₂ gelangt aus dem Fließbett-Trockner zur Homogenisierung in Silos.

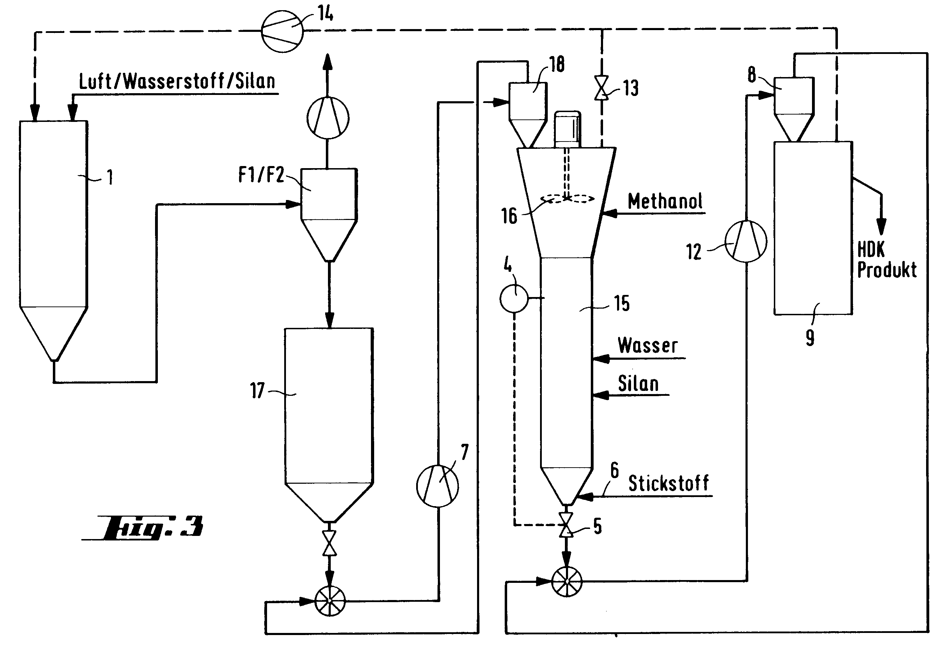

Eine weitere Ausführungsform des erfindungsgemäßen Verfahrens, bei der Hydrophobierungssilo und Wirbelbettreaktor in einem Reaktor vereinigt sind, ist in Fig. 3 beschrieben: In einer Brennkammer 1 wird Siliciumdioxid in bekannter Weise durch Verbrennen eines Organohalogensilans erzeugt. Mittels der Filter F1/F2 werden die chlorwasserstoff- und chlorhaltigen Rauchgase abgetrennt. Das pyrogen erzeugte Siliciumdioxid gelangt zunächst in einen Pufferbehälter 17 und von dort über einen Ventilator 7 und einen Zyklon 18 in den Reaktor 15. Das erweiterte Oberteil des Reaktors 15 wird bevorzugt von außen auf eine Temperatur von 80 bis 120°C beheizt. Der Reaktor ist mit einer Füllstandsmessvorrichtung 4 ausgestattet, die eine Regelvorrichtung am Reaktorausgang 5 ansteuert. Weiterhin ist der Reaktor im oberen Teil mit einer Vorrichtung zum Fluidisieren des Siliciumdioxids 16 ausgestattet. Bevorzugt dafür geeignet ist ein Rührer. Am unteren Ende des Reaktor-Oberteils wird ein Gemisch aus Inertgas und Hydrophobierungshilfsmittel bei etwa 125°C eindosiert. Am unteren Ende des Reaktors, dessen Wandung auf etwa 350 °C erwärmt wird, werden durch jeweils mindestens eine Einleitungsstelle ein Gemisch aus Wasserdampf und Inertgas sowie ein Gemisch aus Hydrophobierungsmittel und Inertgas jeweils gasförmig eingeleitet. Bevorzugt wird dort zudem beispielsweise über eine Impulsregelklappe Impuls-Stickstoff eindosiert. Das hydrophobierte, pyrogene Siliciumdioxid wird mittels eines Förderkreislaufs über den Ventilator 12 und den Zyklon 8 in einem Trockner transportiert, dort entsäuert und zur Homogenisierung in Silos befördert. Über eine Regeleinrichtung 13, die so weit geöffnet wird, daß der Gasdruck über dem SiO₂-Füllstand etwas kleiner als der Ventilatordruck des Ventilators 7 ist, wird das Abgas des Reaktors mit dem Abgas des Trockners 9 vereinigt und über den Ventilator 14 der Mischkammer vor dem SiO₂-Brenner zugeführt. Als Regeleinrichtung 13 ist beispielsweise ein Handschieber geeignet.

### Beispiel 1

In einer Anlage, die Fig. 1 entspricht, wurden aus der Reaktionsflamme, in der 108 kg/h Methyltrichlorsilan und Wasserstoff verbrannt wurden, 43 kg/h SiO₂ in das wärmeisolierte Hydrophobierungssilo abgeschieden.
In dieses Hydrophobierungssilo, dessen Temperatur im Oberteil 135 - 137°C und in der Silomitte 109-110°C betrug, und dessen Innendruck mittels eines Handschiebers 13 auf +13 und +29 mbar gehalten wurde, wurden über getrennte Leitungen 4,5 kg/h Dimethyldichlorsilan (verdünnt mit 0,8 m³/h Stickstoff), 3,3 kg/h Methanol (verdünnt mit 0,8 m/h Stickstoff), 1,5 - 2 kg/h Wasser (verdünnt mit 1 m³/h Stickstoff) gasförmig mit 125°C eindosiert.
In das Oberteil des Hydrophobierungssilos wurde 1 m³/h Stickstoff zugegeben. Als Impuls-Stickstoff wurden über der Niveau-Regelklappe am unteren Ende des Hydrophobierungssilos 3 m³/h Stickstoff zugegeben.
Das hydrophobierte SiO₂ durchlief den Fließbett-Trockner bei Temperaturen zwischen 240°C und 280°C und einem Unterdruck von -4,5 mbar. 138 m³/h Abgas aus dem Trockner und dem Hydrophobierungssilo wurden der Vormischstrecke des Reaktionsbrenners zugeführt und in der SiO₂-Reaktionsflamme verbrannt. Das hierbei gewonnene oberflächenhydrophobierte SiO₂ zeigt folgende Eigenschaften:
- Oberfläche nach BET:: 165 m²/g
- pH:: 4,1
- Kohlenstoffgehalt:: 1,03%

### Vergleichsbeispiel 1

Analog Beispiel 1 wurde oberflächenhydrophobiertes Siliciumdioxid hergestellt. Im Unterschied zu Beispiel 1 wurden die gesammelten Abgase nicht in die Mischkammer vor dem SiO₂-Brenner sondern in den Ringschlitz des Brenners geleitet und so der Reaktionsflamme zugeführt.

Das hierbei gewonnene oberflächenhydrophobierte SiO₂ zeigt folgende Eigenschaften:
- Oberfläche nach BET:: 171 m²/g
- pH:: 4,2
- Kohlenstoffgehalt:: 1,21%

### Vergleichsbeispiel 2

Analog Beispiel 1 wurde oberflächenhydrophobiertes Siliciumdioxid hergestellt. Im Unterschied zu Beispiel 1 wurden die Abgase nicht in die Reaktionsflamme des Brenners zurückgeführt.

Das hierbei gewonnene oberflächenhydrophobierte SiO₂ zeigt folgende Eigenschaften:
- Oberfläche nach BET:: 168 m²/g
- pH:: 4,2
- Kohlenstoffgehalt:: 1,23%

### Beispiel 2

In einer Anlage, die Fig. 2 entsprach, wurden aus der Reaktionsflamme, in der 108 kg/h Methyltrichlorsilan und Wasserstoff verbrannt wurden, 43 kg/h SiO₂ in ein wärmeisoliertes Hydrophobierungssilo 3 abgeschieden.
In dieses Hydrophobierungssilo, dessen Temperatur im Oberteil 128 - 130°C und in der Silomitte 103-108°C betrug, und dessen Innendruck auf +3 und +32 mbar gehalten wurde, wurden über getrennte Leitungen 4,8 kg/h Dimethyldichlorsilan (verdünnt mit 0,8 m³/h Stickstoff) 1,0 kg/h Methanol (verdünnt mit 0,8 m³/h Stickstoff), 1,5 - 1,8 kg/h Wasser (verdünnt mit 1 m³/h Stickstoff) gasförmig mit 125°C eindosiert.
In das Oberteil des Hydrophobierungssilos wurde 1 m³/h Stickstoff zugegeben. 4 m³/h Impuls-Stickstoff wurden über der Niveau-Regelklappe 5 zugegeben.
Im Anschluß an das Hydrophobierungssilo durchlief das SiO₂ den Wirbelbettreaktor 11, dem weitere 5 m³/h Stickstoff aufgegeben wurden, und in dem das SiO₂ auf Temperaturen zwischen 305 und 348 °C gebracht wurde. Im Wirbelbettreaktor herrschte ein Unterdruck von -1 mbar. Nach dem Wirbelbettreaktor wurde das hydrophobierte SiO₂ durch einen Trockner bei Temperaturen zwischen 290 und 300°C geschleust. Die vereinigten Abgase von Trockner, Wirbelbettreaktor und Hydrophobierungssilo, deren Menge 145 m³/h betrug, wurden der der Vormischstrecke des SiO₂ Reaktionsbrenners zugeführt und vermischt mit den Edukten zu SiO₂.

Das gewonnene oberflächenhydrophobierte SiO₂, hat folgende Eigenschaften:
- Oberfläche nach BET:: 173 m²/g
- pH:: 4,2
- Kohlenstoffgehalt:: 1,05%

### Vergleichsbeispiel 3

Analog Beispiel 2 wurde oberflächenhydrophobiertes Siliciumdioxid hergestellt. Im Unterschied zu Beispiel 2 wurden die gesammelten Abgase nicht in die Vormischstrecke des SiO₂-Brenners sondern in den Ringschlitz des Brenners geleitet und so der Reaktionsflamme zugeführt.

Das hierbei gewonnene oberflächenhydrophobierte SiO₂ zeigt folgende Eigenschaften:
- Oberfläche nach BET:: 169 m²/g
- pH:: 4,1
- Kohlenstoffgehalt:: 1,01%

### Vergleichsbeispiel 4

Analog Beispiel 2 wurde oberflächenhydrophobiertes Siliciumdioxid hergestellt. Im Unterschied zu Beispiel 2 wurden die Abgase nicht in die Reaktionsflamme des Brenners zurückgeführt.

Das hierbei gewonnene oberflächenhydrophobierte SiO₂ zeigt folgende Eigenschaften:
- Oberfläche nach BET:: 176 m²/g
- pH:: 4,2
- Kohlenstoffgehalt:: 1,07%

### Beispiel 3

Die Verdickungswirkung der oberflächenhydrophobierten SiO₂-Proben der Beispiele 1 und 2 sowie der Vergleichsbeispiele 1 bis 4 wurde durch Vergleich ihrer individuellen Verdickungsleistung in einem flüssigen Polyesterharz bestimmt. Bei diesem Test wurden je 8 g der SiO₂ Proben in jeweils 192 g Polyesterharz (Ludopal P6 erhältlich bei der Firma BASF Ludwigshafen) dispergiert. Die Dispergierung wurde mit einem Labordisolver (Firma Pendraulik) 5 min bei einer Drehzahl von 2800 UpM durchgeführt. Die Verdickungswirkung der 4 %-igen HDK/Polyesterharz Dispersionen wurde mit einer Meßeinrichtung nach DIN 53019 bestimmt.

Es wurden folgende Verdickungswerte bestimmt:

| | |
|---|---|
| Beispiel 1: | 4150 mPas |
| Vergleichsbeispiel 1: | 3100 mPas |
| Vergleichsbeispiel 2: | 4050 mPas |
| Beispiel 2: | 4300 mPas |
| Vergleichsbeispiel 3: | 3200 mPas |
| Vergleichsbeispiel 4: | 4450 mPas |

## Patentansprüche

1. Verfahren zur kontinuierlichen Hydrophobierung von aus Siliciumhalogenverbindungen pyrogen hergestelltem Siliciumdioxid mittels Organohalogensilanen, welches dadurch gekennzeichnet ist, daß alle organische Bestandteile enthaltenden Abgase in die Mischkammer vor dem SiO₂ Reaktionsbrenner geleitet und in der SiO₂ Reaktionsflamme verbrannt werden.

## Claims

1. A process for continuously hydrophobicizing pyrogenic silica from silicon halide compounds by means of organohalosilanes, which comprises feeding all waste gases containing organic components into the mixing chamber upstream of the SiO₂ reaction burner and burning them in the SiO₂ reaction flame.

## Revendications

1. Procédé pour l'hydrofugation en continu à l'aide d'organohalogénosilanes du dioxyde de silicium préparé par pyrogénation des composés halogénosiliciés, caractérisé en ce qu'on dirige tous les effluents gazeux contenant les composants organiques dans l'enceinte de mélange installée avant le brûleur de réaction du SiO₂ et on les brûle dans la flamme réactionnelle du SiO₂.
